# EUROPÄISCHE PATENTSCHRIFT

(11) **EP 1 411 853 B1**
(45) Veröffentlichungstag und Bekanntmachung des Hinweises auf die Patenterteilung: **23.11.2005**
(21) Anmeldenummer: 02740457.3
(22) Anmeldetag: 10.04.2002
(51) Int. Cl.: A61C 3/14

(54) **VORRICHTUNG ZUM ENTFERNEN VON ZÄHNEN**
DEVICE FOR THE REMOVAL OF TEETH
DISPOSITIF D'EXTRACTION DE DENTS

(30) Priorität: 12.04.2001 DE 10118717; 27.07.2001 DE 10136762
(43) Veröffentlichungstag der Anmeldung: 28.04.2004
(73) Patentinhaber: Hornig, Hans-Peter, 06320 Cap-D'Ail (FR); Offermann, Thomas, 06320 Cap-D'Ail (FR)
(72) Erfinder: Hornig, Hans-Peter, 06320 Cap-D'Ail (FR); Offermann, Thomas, 06320 Cap-D'Ail (FR)
(74) Vertreter: Sartorius, Peter
(86) Internationale Anmeldenummer: PCT/EP2002/003988
(87) Internationale Veröffentlichungsnummer: WO 2002/083024

(56) Entgegenhaltungen:
- EP-A- 0 318 709
- DE-A- 19 815 133
- DE-C- 603 210
- DE-C- 686 412
- FR-A- 2 559 053
- FR-A- 2 702 648
- GB-A- 210 496
- US-A- 4 443 196
- US-A- 5 015 185
- US-A- 5 839 896
- US-A- 6 019 602
- PATENT ABSTRACTS OF JAPAN vol. 1999, no. 04, 30. April 1999 (1999-04-30) & JP 11 019098 A (FUJII YOSHIAKI), 26. Januar 1999 (1999-01-26)

## Beschreibung

Die Erfindung bezieht sich auf eine Vorrichtung zum Entfernen von Zähnen und/oder Zahnwurzeln aus dem Zahnfach oder Kieferknochen mit **einem** zangenförmig ausgebildeten, zwei Hebel und zwei über ein Gelenk schwenkbar damit verbundene Branchen aufweisenden Ziehgerät und einem daran anlegbaren Widerlager, das mindestens eine Öffnung zur Aufnahme eines Ziehteils oder Schraubteils aufweist, wobei das Ziehteil mit einem oder mehreren Widerstandselementen zur Verankerung in einem Zahn oder Zahnstumpf ausgestattet ist und mindestens ein weiteres zur Kopplung mit einem Aufnahmeteil oder einer Schlitzöffnung der Branche dienendes Widerlager oder Stellteil aufweist.

Es sind bereits Geräte zum Entfernen von Zähnen aus dem Zahnfach bzw. aus dem Kiefer wie Zangengeräte bekannt (DE 198 15 133 A1, DE-PS 686 412 und DE 37 40 474), die jeweils mit einem Ziehgerät ausgerüstet sind, wobei das Ziehgerät aus mindestens einem sich in der Mundhöhle oder auf dem Kieferdamm oder dem Zahnoberteil oder der Zahnkrone abstützbaren, mindestens eine Öffnung aufweisenden ersten Widerlager, einem sich auf dem ersten Widerlager abstützbaren zweiten Widerlager mit Schraubteil und mindestens einem durch die Öffnungen des ersten und/oder mindestens eines zweiten Widerlagers erstreckenden Ziehteil mit einem oder mehreren Widerstandselementen besteht.

Die DE 198 15 133 A beschreibt dabei auch eine Ziehvorrichtung mit einem Widerlager zum Ansetzen der durch die beiden Hebel verlängerten Branchen. Die manuelle Kraft wird über die Hebel eingeleitet und entsprechend dem Verhältnis der Hebellängen zu den Längen der Branchen übersetzt. Die Vorrichtung nach der DE 198 15 133 A1 hat insbesondere den Nachteil, dass sich die Wurzelschraube aufgrund der hohen Kräfte nicht gleichmäßig und ohne Verletzungen aus dem Zahnbett herausbewegen kann, weil bei Betätigung der beiden Hebelarme der Kräfteeinsatz nicht entsprechend dosiert werden kann und es daher bei der Extraktion des Zahns zu einer Beschädigung der alveolen Wand kommen kann.

Die US-A-5,839,896 beschreibt eine Vorrichtung zum Ziehen von Zahnstiften unter Einsatz einer mechanischen Krafteinleitung. Hierzu wird gemäß Spalte 2, Zeile 67 ff. eine Schraube 30 drehbar in einem Zapfen 32 und in einer Mutter 34 gelagert, so dass beim manuellen Drehen des Handrades 36 die beiden äußeren Enden 26 und 28 der Hebel 12 und 14 zusammengedrückt werden.

Die FR-A-2 702 648 offenbart wie auf Seite 2, Mitte letzter Absatz beschrieben eine bekannte Klemmzange (pince étau) mit einem Einstellsystem (systême compas), das zwei Funktionalitäten erlaubt. Das Festspannen/Klemmen und das Entspannen. Das traditionelle Einstellsystem erlaubt das Stabilisieren der Öffnung (l'ouverture) der Klemmzange im gewünschten Abstand (écartement), um die Klemmzange mit dem Spannzieher zu verwenden. Hierzu weisen die Hebel (bras) eine Buchse (plot), und die Buchse eine Bohrung ohne Gewinde auf, die im Durchmesser größer als der Gewindestift (tige fileté) ist. Das erlaubt, dass die Klemmzange an den Zahn gekuppelt/angelegt werden kann. Auf der Gewindestange ist das Einstellsystem / System zum Entkoppeln (système de débryage) verschiebbar angeordnet, das einen verschiebbar auf dem Gewindestift angeordneten Konus (cöne) aufweist, an dem die geschlitzten Teile (parties fendues) der gerändelten Scheibe (molette de serrage) anliegen / aufgenommen sind. Die beiden geschlitzten Teile (partie fendue) sind an der Scheibe derart angeordnet, dass die Klemmung der Klemmzange gewährleistet wird, in dem die geschlitzten Teile in den Konus eindringen und dadurch der Konus die geschlitzten Teile zusammendrückt und die Teile am Gewindestift das Gewinde klemmen. Dies setzt ausreichenden Widerstand durch die beiden Hebel voraus.

Der Erfindung liegt die Aufgabe zugrunde, eine Vorrichtung zum Entfernen von Zähnen aus dem Zahnfach oder Kieferknochen derart auszubilden und anzuordnen, dass eine einfache, exakte und justierbare Krafteinleitung unter gleichzeitigem Zuwachs des Stellwegs zum Ziehen des Zahnteils gewährleistet ist.

Gelöst wird die Aufgabe erfindungsgemäß dadurch, dass das Widerlager als Löffel zur Aufnahme einer verformbaren Masse oder eines Abdruckmaterials ausgebildet ist und der Löffel oder das Abdruckmaterial direkt an der Mundhöhle, dem Kieferdamm, dem Zahnoberteil und/oder der Zahnkrone anlegbar ist, die beiden Hebelarme manuell und mittels einer einseitig an einem Hebel fixierten und in einer Öffnung oder Bohrung des zweiten Hebels bewegbaren Stange mechanisch gegen die Wirkung eines zwischen den beiden Hebelarmen angeordneten Federelements und zum Einleiten der zum Ziehen des Zahns notwendigen Kraft verstellbar sind, wobei die Stange ein Gewinde aufweist und auf das Gewinde der Stange eine Flügelmutter aufgedreht ist, die an den Hebel anlegbar ist.

Durch die vorteilhafte Ausbildung und Anordnung des Ziehgeräts lässt sich der kranke Zahn ohne weiteres in Axialrichtung bzw. in Längsrichtung des Zahns aus seinem Wurzelbett herausziehen, ohne dass dabei das Wurzelbett vergrößert wird, so dass dieses ohne größere Nachbehandlung zur Aufnahme von Implantaten geeignet ist.

Vorteilhaft ist es hierzu, dass die Hebeleinrichtung Teil einer Zange ist, die zwei durch das Gelenk verbundene Hebel und zwei an diesen angeordnete Branchen aufweist, die in einer Stellung gegeneinander anliegen können und beim Betätigen der Hebel voneinander wegbewegt werden und dadurch das Ziehgerät verstellen. Vorteilhaft ist es auch, dass die Hebeleinrichtung Teil einer Zange ist, die zwei durch ein Gelenk verbundene Hebel aufweist, wobei an dem einen Hebel eine ein Gewinde aufweisende Stange angeschlossen ist, die sich durch eine Öffnung oder Bohrung des zweiten Hebels erstreckt, wobei zwischen den beiden Hebeln das Federelement vorgesehen ist, das die beiden Hebel auseinanderdrückt.

Ferner ist es vorteilhaft, dass der Stift ein erstes in eine Öffnung des Zahns einführbares Widerstandselement oder Gewindeteil und ein Stellteil und/oder zweites Gewindeteil aufweist.

Vorteilhaft ist es auch, dass die Gewinde des ersten und zweiten Gewindeteils gegenläufig zueinander ausgebildet sind.

Ferner ist es vorteilhaft, dass das Widerlager derart ausgebildet ist, dass es auf mindestens zwei oder mehreren neben dem zu extrahierenden Zahn vorhandenen Zähnen abstützbar ist.

Gemäß einer bevorzugten Ausführungsform der erfindungsgemäßen Lösung ist schließlich vorgesehen, dass das Widerlager als Zahnlöffel ausgebildet ist und eine oder mehrere Öffnungen oder eine Langlochöffnung aufweist.

Vorteilhaft ist es außerdem, dass der Zahnlöffel aus einem als Widerlager ausgebildeten Wandteil und mindestens zwei das Wandteil begrenzenden Seitenteilen gebildet ist, die dem kurvenförmigen Verlauf des Kiefers angepasst sind.

Im Zusammenhang mit der erfindungsgemäßen Ausbildung und Anordnung ist es von Vorteil, dass der Stift an seinem oberen Ende ein Kupplungsteil zum Anschluss eines Stellarms aufweist.

Außerdem ist es vorteilhaft, dass das Ziehgerät aus mindestens einem sich in der Mundhöhle oder auf dem Kieferdamm oder den Zahnoberteilen oder Zahnkronen abstützbaren Widerlager, einem sich an dem Widerlager abstützbaren Ziehteil oder Stift mit einem oder mehreren hakenförmigen und/oder reibungshemmenden und/oder auf Zug beanspruchbaren Widerstandselementen besteht, wobei zumindest ein Widerstandselement oder ein Gewindeteil in das Zahninnere einführ- und dort fest verankerbar ist.

Ferner ist es vorteilhaft, dass zwischen dem Ziehteil oder dem Stift und dem Widerlager ein Stellteil einsetzbar ist oder wirkt, mittels dessen der Stift gemeinsam mit dem Zahn aus dem Zahnfach herausziehbar ist.

Vorteilhaft ist es außerdem, dass die Stange an ihrem oberen Ende ein Kupplungsteil oder Gewindeteil zum Anschluss eines Stellteils und/oder einer Mutter aufweist.

Ferner ist es vorteilhaft, dass die Stange zumindest ein Federelement aufnimmt.

In weiterer Ausgestaltung der Erfindung ist es vorteilhaft, dass das erste Widerlager oder der Löffel an dem einen Hebel oder einer Branche fest oder lösbar angeordnet ist und dass das Ziehteil oder die Stange ein Stellteil und/oder Arretierungsteil aufweist, mittels dessen die Stange betätigbar ist.

Schließlich ist es von Vorteil, dass das Stellteil als Schrittmotor ausgebildet ist, der mit der Stange oder dem Stift in Wirkverbindung bzw. in Antriebsverbindung bringbar ist, mittels dessen der Zahn aus dem Zahnfach mittel- oder unmittelbar herausziehbar ist.

Vorteilhaft ist es auch, dass der Stift starr ausgebildet ist und zwischen seinem oberen und unteren Ende zumindest eine Markierung oder Einkerbung oder zwei mit Abstand zueinander angeordnete Markierungen aufweist, die derart angeordnet ist, dass sie als Maß für den Stellweg des Zahns aus seinem Zahnfach dient.

Da der Stift mit zwei gegenläufigen Gewinden versehen ist, lässt er sich ohne weiteres in den Zahn bzw. den Zahn- oder Wurzelkanal einschrauben und so verankern, dass der Stift auf Zug beanspruchbar ist. Durch die Verwendung eines zweiten Gewindes lässt sich ohne weiteres eine Kontermutter aufschrauben, die sich dann beim Drehen des Stifts mittels eines Kurbelarms auf einem Widerlager abstützen kann. Das Widerlager kann in vorteilhafter Weise über geeignete Abstützmittel auf dem Zahnschmelz oder auf dem Kieferdamm abgestützt werden. Hierzu ist es vorteilhaft, wenn zwischen dem Widerlager und dem Zahnschmelz Bissmaterial vorgesehen wird. Das Widerlager stützt sich dann über das Bissmaterial auf den benachbarten Zähnen ab, ohne diese dadurch übermäßig zu belasten bzw. Zahnschmelz zu zerstören. Sollten in unmittelbarer Nähe des zu ziehenden Zahns keine Zähne vorhanden sein, so lässt sich das Bissmaterial auch so ausformen, dass es sich ohne weiteres auf dem Kieferdamm abstützen kann. In vorteilhafter Weise ist das Widerlager derart ausgebildet, dass es sich auch über mehrere benachbarte Zähne abstützen kann. Das Widerlager kann auch als Löffel ausgebildet sein, der dem Gebissverlauf angepasst ist und zur Aufnahme des Bissmaterials ohne weiteres geeignet ist.

In vorteilhafter Weise kann der Löffel mit mehreren hintereinander angeordneten Bohrungen versehen sein oder mit einer Langlochöffnung ausgestattet sein, in die der Stift eingebracht werden kann.

Um beispielweise einen Hebelarm am oberen Ende des Stifts zu befestigen, kann dieser ein Kupplungsteil bzw. einen Sechskantanschluss aufweisen, auf den ein Kupplungselement einer Ratsche aufsetzbar ist. Die Steigung des oberen Gewindes ist so gewählt, dass mit geringstmöglichem Kraftaufwand der Zahn aus dem Zahnfach herausziehbar ist. Das Gewindegerät kann auch in vorteilhafter Weise als metrisches Feingewinde ausgebildet sein.

Da sich auf dem Widerlager eine Mutter bzw. ein zweites ein Gewindeteil aufweisendes Widerlager abstützen kann, lässt sich mittels des Stifts und einer bereits erwähnten Ratsche der im Zahn befestigte Stift mittels des ersten Widerlagers und der auf dem Widerlager abstützbaren Mutter in Axialrichtung des Zahns nach oben aus dem Zahnfach ohne Zerstörung des Zahnfachs herausziehen.

Der Abstand zwischen der Oberkante. des Zahns und der Unterseite des ersten Widerlagers ist dabei so gewählt, dass ein ausreichender Hub zum Herausziehen des Zahns aus dem Zahnfach vorhanden ist.

In weiterer Ausgestaltung der Erfindung ist es vorteilhaft, dass das Ziehgerät aus mindestens einem sich in der Mundhöhle oder auf dem Kieferdamm oder dem Zahnoberteil oder der Zahnkrone abstützbaren, mindestens eine Öffnung aufweisenden ersten Widerlager, einem sich auf dem ersten Widerlager abstützbaren zweiten Widerlager mit Schraubteil und mindestens einem durch die Öffnungen des ersten und/oder mindestens eines zweiten Widerlagers erstreckenden Ziehteil mit einem oder mehreren Widerstandselementen besteht, wobei das erste und/oder das zweite Widerlager Teil einer Hebeleinrichtung mit mindestens einer Öffnung ist, durch die sich das Ziehteil derart erstreckt, dass bei Betätigung der Hebeleinrichtung sich zumindest ein Widerstandselement und/oder ein Gewindeteil, das in das Zahninnere einführ- und/oder fest verankerbar ist, in etwa in Längsrichtung des Zahns oder Zahnstumpfs bewegt und dabei diesen aus seinem Zahnfach herausbewegt.

Vorteilhaft ist es außerdem, dass die Markierung auf einem gewindelosen Schaftteil des Stiftes angeordnet ist.

Durch die vorteilhafte Anordnung ist also eine Entfernung von Zähnen, auch von Wurzelresten, ohne großen Kraftaufwand möglich. Das einwandfreie Entfernen von einwurzligen Zähnen ermöglicht auch eine Sofortimplantation, da die Alveole weitgehend unbeschädigt bleibt. Ebenso ist eine Entfernung von frakturierten, einwurzligen Zähnen möglich. Außerdem wird durch die schonende Behandlung der Alveole auch eine Extraktionstherapie in der Kiefernorthopädie bei Kindern möglich (Prämolarenbereich). Die einfache Hebelanordnung in Verbindung mit der Stellvorrichtung ermöglicht insbesondere ein sehr vorsichtiges und - falls notwendig - dosiertes Herausziehen des Zahns aus seinem Wurzelbett, wobei die atraumatische Extraktionstechnik unter Erhalt sämtlicher Weich- und Hartgewebestrukturen erfolgen kann.

Durch diese Behandlung treten geringere postoperative Symptome, d. h. weniger Schmerzen, verminderte Schwellung, auf und eine verbesserte Heilung tritt ein. Durch die Verstellvorrichtung, insbesondere durch die Schrauben mit Flügelmutter am Ende des Hebelarms, kann eine sehr feine Dosierung der Hebelkräfte erreicht werden. Da das obere und das untere Hebelteil je mit einer schlitzförmigen Öffnung versehen ist, lässt sich das vordere Ende ohne weiteres in kurzer Zeit exakt auf die Wurzelschraube aufsetzen. Hierzu ist es vorteilhaft, dass das vordere Teil des Hebels sich verjüngt, so dass man hierzu auch eine entsprechende Anlage am Widerlager bzw. am Löffel hat.

Weitere Vorteile und Einzelheiten der Erfindung sind in den Patentansprüchen und in der Beschreibung erläutert und in den Figuren dargestellt. Es zeigt:
- Figur 1: eine schematische Darstellung eines Backenzahns, teilweise im Schnitt, mit dem in den Backenzahn eingeschraubten Stift und dem zugehörigen Widerlager,
- Figur 2: eine Ratsche zur Verstellung des in den Zahn eingeschraubten Stifts, der sich durch eine Öffnung in dem Widerlager bzw. dem Löffel zur Aufnahme von Bissmaterial erstreckt,
- Figur 3: eine schematische Darstellung des Ziehgeräts, das sich mittels Bissmaterial auf mehreren Schneidezähnen und einem Backenzahn abstützen kann,
- Figur 4: einen Zahnlöffel zur Aufnahme des Bissmaterials,
- Figur 5: einen Schnitt entlang der Linie 4/4 gemäß Figur 4,
- Figur 6: eine perspektivische Darstellung der geschlossenen Zange mit zwei als Hebel ausgebildeten Branchen, wobei an einer Branche ein Löffel anliegt, mit der eingeschraubten Wurzelschraube bzw. dem Ziehteil,
- Figur 7: eine ähnliche Darstellung wie in Figur 6, wobei die Zange geöffnet ist,
- Figur 8: eine perspektivische Darstellung des Ziehteils bzw. der Wurzelschraube, bevor diese in den Zahn eingeschraubt wird, mit
einer Halterung und einem Vierkantschlüssel.

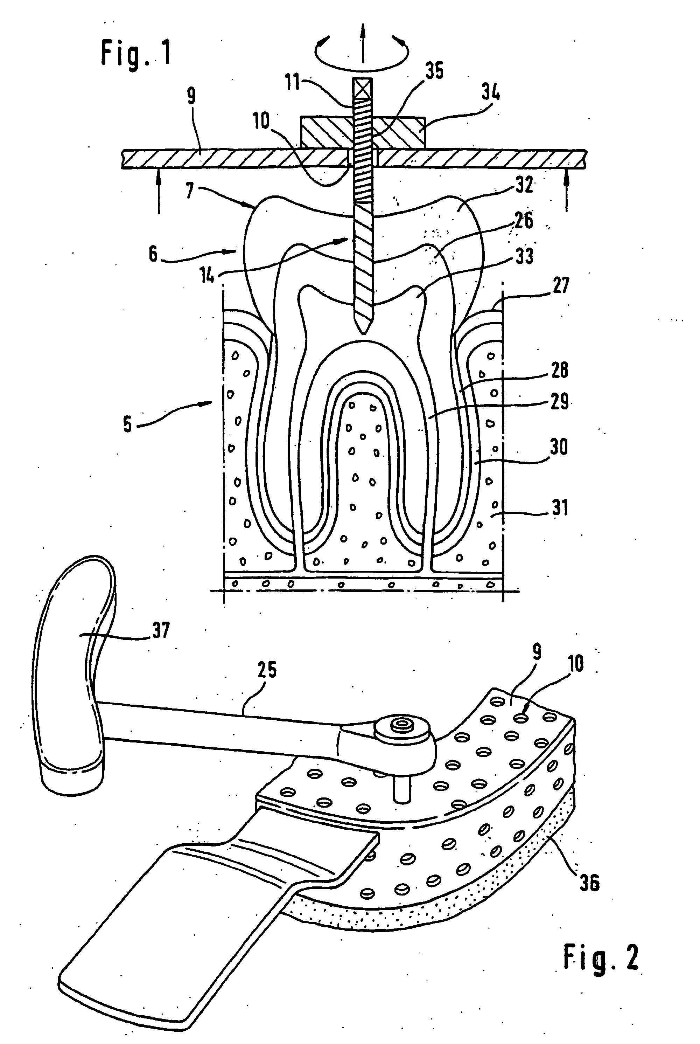

In der Zeichnung ist in Figur 1 eine schematische Darstellung eines Backenzahns 5 gezeigt, in dem der Zahnschmelz 32, das Zahnbein 26, der Zement 28, der Wurzelkanal 29, die Wurzelhaut 30 (Periodontium), der Kieferknochen 31 und das Zahnmark (Zahnpulpa) 33 schematisch angedeutet sind. In der Zeichnung ist gemäß Figur 1 in dem Backenzahn 5 ein Ziehteil bzw. ein Stift 11 eingeschraubt. Der Stift 11 besteht aus einem oberen, rechtsgängigen Gewinde 16, das als metrisches Feingewinde ausgebildet sein kann. An das Gewindeteil 16 schließt sich ein weiteres im Gegensatz zu dem Gewindeteil 16 anschließendes Gewindeteil 17 an, das auch als selbstschneidendes Gewinde ausgebildet sein kann und in eine vorbereitete Bohrung des Zahns 5 derart fest eingeschraubt werden kann, dass es zum Ziehen des Zahns 5 die aufzubringenden Zugkräfte ohne weiteres aufnimmt, ohne dass dabei der Zahn bzw. der Zahnschmelz 32 bricht.

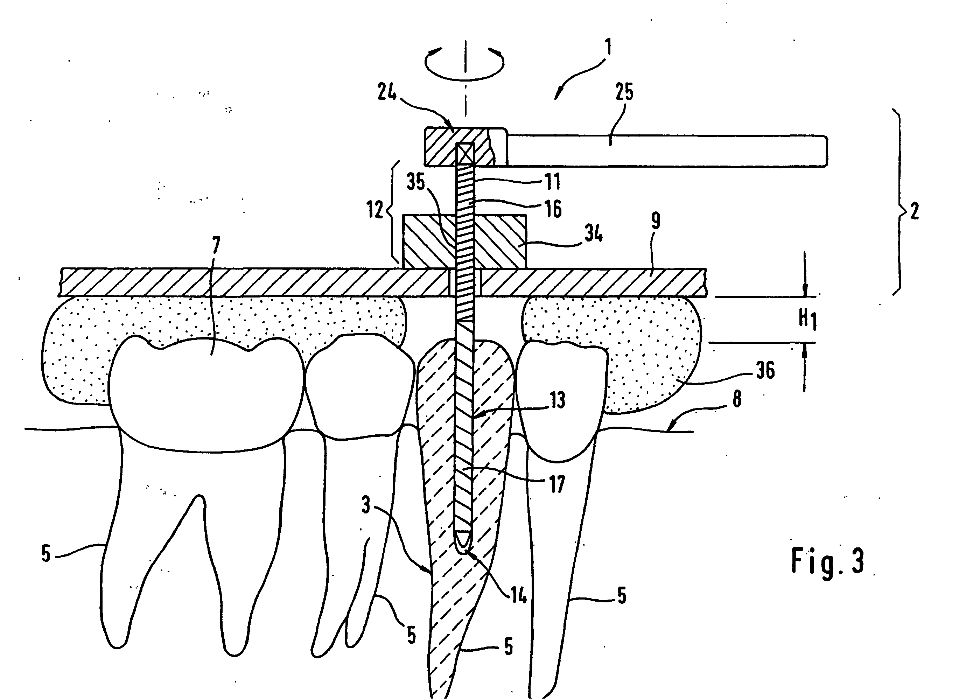

In Figur 3 ist beispielsweise der Stift 11 in einen Schneidezahn, und zwar in den Wurzelkanal 29, eingeschraubt. Die Einschraubtiefe des Stifts 11 richtet sich nach der Festigkeit des zu ziehenden Zahns und ist so gewählt, dass er nicht bis in den Kieferknochen 31 hineinragt.

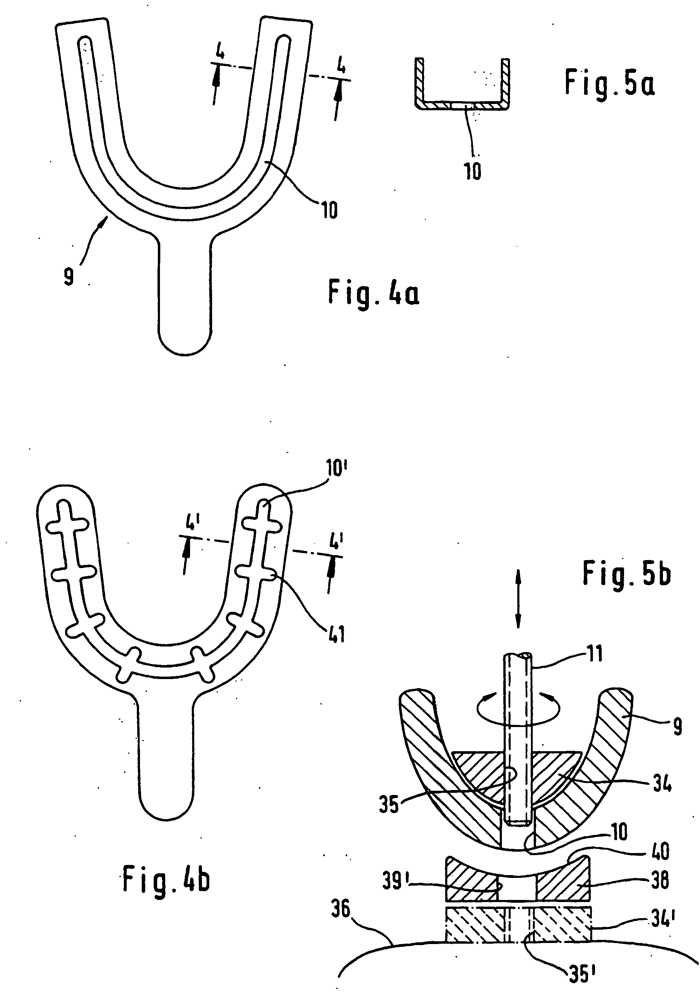

In Figur 1 ist ein Widerlager 9 wiedergegeben, das gemäß Figur 5 auch als Löffel zur Aufnahme von Bissmaterial ausgebildet sein kann und hierzu beispielsweise der Außenkontur des Kiefers angepasst wird, so dass der Löffel mit dem Bissmaterial 36 auf die Zahnoberseite bzw. die Zahnkrone 7 formstabil aufgebracht werden kann und keine Beeinträchtigung oder Beschädigung der gesunden Zähne eintritt. Sollten im Bereich des zu ziehenden Zahns keine Stützzähne vorhanden sein, so besteht auch die Möglichkeit, an anderer geeigneter Stelle eine Abstützung des Widerlagers 9 vorzunehmen. Insbesondere ist es dabei vorteilhaft, wenn sich das Bissmaterial auf dem Kieferdamm des Ober- oder Unterkiefers abstützt. Es wird in vorteilhafter Weise gemäß Figur 3 soviel Bissmaterial verwendet, dass ein ausreichender Abstand H₁ zwischen der Unterseite des Widerlagers 9 und der Zahnkrone 7 besteht, um einen ausreichenden Hubweg in Axialrichtung des Zahns 5 zur Verfügung zu stellen, so dass dieser ganz exakt aus seinem Zahnfach herausbewegt werden kann, ohne dass dabei das Zahnfach vergrößert wird. Hierdurch ist das Zahnfach nach anschließender Behandlung ohne weiteres geeignet, Zahnimplantate aufzunehmen.

Das in Figur 3 dargestellte Widerlager kann auch als horizontal ausgerichtete Platte ausgebildet sein, die mit einer entsprechenden Bohrung 10 oder mit zahlreichen hintereinander angeordneten Bohrungen oder einer Längsöffnung 10 ausgestattet ist, durch die der Stift 11 geführt werden muss, wenn er das Widerlager 9 aufnehmen soll.

Gemäß Figur 2 ist das Widerlager mittels einer Bohrung 10 auf den Stift 11 aufgesetzt und stützt sich dabei gemäß Figur 3 auf den benachbarten gesunden Zähnen 5 oder den Backenzähnen ab. Der Stift 11 wird mittels der Ratsche 25 in den herauszuziehenden Zahn 5 eingeschraubt. Hierzu ist auf der Oberseite des Widerlagers 9 ein zweites Widerlager 34 vorgesehen, das mit einer Gewindebohrung 35 ausgestattet ist. Durch Drehen der Ratsche 25 dreht sich der Stift 11 aus dem Widerlager bzw. der Mutter 34 nach oben heraus und nimmt dabei den Zahn in Axialrichtung aus dem Zahnfach heraus. Dabei löst sich allmählich auch die Wurzelhaut 30 (Periodontium) zwischen der Zahnoberfläche bzw. dem Zahnhals und dem Zahnfach bzw. Kieferknochen 31. Der Zahn braucht also nicht wie bisher gelockert zu werden, sondern er kann durch gleichmäßiges Drehen der Ratsche 25 in Axialrichtung bewegt werden. Durch diese Ziehungsart findet keine Erweiterung des Zahnfachs statt.

Die Ratsche 25 ist hierzu mit einem Kupplungsteil 24 ausgestattet, das auf ein entsprechendes am oberen Ende des Stifts 11 vorgesehenes Kupplungsteil lösbar aufsetzbar ist.

Anstelle der Ratsche 25 kann der Stift 11 auch mittels eines antreibbaren, pneumatischen oder elektrischen Motors, der in der Zeichnung nicht dargestellt ist, betätigt werden. Der Motor ist hierzu mit Links- oder Rechtsantrieb ausgestattet, so dass er dazu geeignet ist, zum einen den Stift 11 in den Zahn 5 einzuführen, und zum anderen die Möglichkeit schafft, dass nach Einsetzen des Stifts 11 in den Zahn 5 des Stifts 11 in entgegengesetzter Richtung zum zweiten Gewindeteil 17 gedreht wird und er dabei mittels des Widerlagers 9 den Zahn 5 nach oben bewegt. Die in Figur 3 dargestellte Mutter ist hierzu in dem Antriebsmotor integriert.

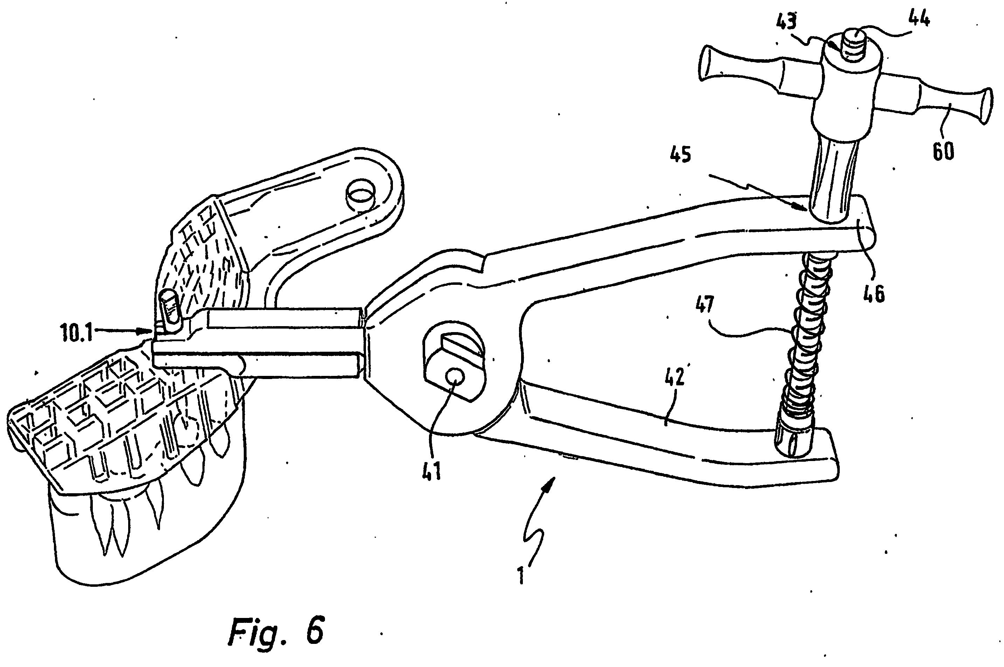

In den Figuren 6 bis 7 ist ein weiteres Ausführungsbeispiel einer Vorrichtung zum Entfernen von Zähnen 5 und/oder Zahnwurzeln aus dem Zahnfach 3 oder dem Kieferknochen 4 mittels eines Ziehgeräts dargestellt, das als Hebeleinrichtung bzw. als Zange ausgebildet ist.

Die Zange besteht aus einem ersten Griff 42 und einem zweiten Griff 46, die über einen Bolzen miteinander verbunden sind. Hinter dem Gelenkbolzen 41 befinden sich zwei Branchen 39, die fest mit den Griffen 42 bis 46 verbunden sind.

Mit Bezug auf Figur 6 befindet sich an dem Ende des Hebels 42 eine Stange 44, die fest an den Hebel 42 angeschlossen bzw. mit diesem verschraubt oder verschweißt ist. Die Stange 44 ist senkrecht auf dem Hebel 42 angeordnet und erstreckt sich durch eine in dem Hebel bzw. Griffteil 46 vorgesehene Bohrung 45. An dem äußeren Ende der Stange 44 befindet sich ein Gewinde 43 zur Aufnahme einer Schraube, beispielsweise Rändelschraube 60 bzw. Flügelmutter, die durch den Operateur verstellbar ist, so dass die beiden Griffteile 42 und 46 aufeinander zubewegt werden können und dabei eine Stellung gemäß Figur 6 einnehmen. Hierzu wird die **Flügelmutter 60** im Uhrzeigerdrehsinn verstellt. Wird die Flügelmutter 60 entgegen dem Uhrzeigerdrehsinn verstellt, so drückt die auf der Stange 44 vorgesehene und zwischen den beiden Griffteilen 42 und 46 angeordnete Feder 47 die beiden Griffteile 42 und 46 gemäß Figur 6 nach außen, so dass die beiden Branchen 39 zur Anlage kommen können.

Mit Bezug auf Figur 5 befindet sich an der unteren Branche 39 das erste Widerlager 9 bzw. ein Löffel 9, der sich mittels des im Löffel 9 aufgenommenen Abdruclanaterials bzw. Bissmaterials 36 auf dem Zahnfleisch 27 mittel- oder unmittelbar abstützt. Der in Figur 5 dargestellte Löffel kann ähnlich wie der in den Figuren 2 bis 5b dargestellte Löffel ausgebildet sein.

Der Löffel 9 kann beispielsweise mit der Unterseite der Branche 39 lösbar oder auch fest verbunden sein. Beispielsweise ist es möglich, dass der Löffel mit der Branche 39 verschraubt oder verschweißt ist.

Der Löffel 9 ist mit einer oder mehreren Öffnungen versehen, durch die sich der Stift bzw. die Extraktionsschraube bzw. Wurzelschraube 11 erstreckt.

Die Extraktionsschraube 11 weist gemäß Figur 1 und 3 wie bei dem anderen Ausführungsbeispiel ebenfalls Widerstandselemente bzw. Widerhaken oder Schraubelemente auf, so dass die Extraktionsschraube gemäß Figur 5 in den Zahn oder Zahnstumpf eingeschraubt werden kann. Die Extraktionsschraube bzw. der Stift 11 erstreckt sich hier durch in den Branchen 39 vorgesehene Bohrungen bzw. Öffnungen 10, wobei das obere Ende des Stifts 11 an der Oberfläche der Branche 39 hervorsteht.

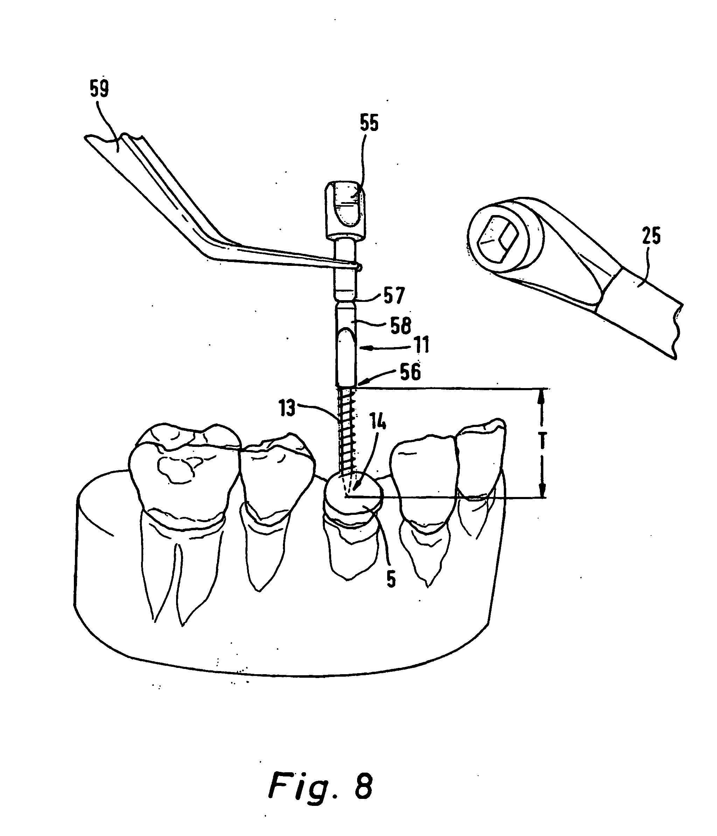

Im Ausführungsbeispiel gemäß Figur 8 ist die Wurzelschraube bzw. das Ziehteil 11 perspektivisch dargestellt und wird in eine bereits vorgesehene, in der Zeichnung nicht weiter dargestellte Bohrung 14 des Zahns 5 mittels der Ratsche 25 eingeschraubt, die hierzu auf ein Stellteil bzw. Vierkantteil 56 aufgesetzt wird. Die Wurzelschraube 11 wird mittels einer Halterung 59 in der in Figur 8 dargestellten Position gehalten, damit der Einschraubvorgang leichter vorgenommen werden kann. Die Wurzelschraube 11 weist hierzu ein Gewindeteil 13 mit einer Einschraubtiefe T gemäß Figur 8 auf. An das Gewindeteil 13 schließt sich ein Schaftteil 58 mit einer Markierung 57 im oberen Bereich an. Am oberen Ende des Schafts 58 befindet sich das Vierkantteil 55.

Die Bohrung 14 im Zahn 5 ist etwas länger gewählt als die Einschraubtiefe T der Wurzelschraube 11, damit beim Einschraubvorgang der Wurzelschraube in die Bohrung 14 vermieden wird, dass das untere Ende des Gewindeteils 13 gegen das Sacklochteil der Bohrung 14 anstößt und damit den Zahn sprengt. Hierzu ist in vorteilhafter Weise am oberen Ende des Gewindeteils bzw. im Schaftbereich ein Markierungsring 56 vorgesehen.

Das obere Ende des Stifts 11 kann mit einem Gewinde versehen sein, so dass auf das Gewindeteil des Stifts 11 das Arretierungselement bzw. eine Arretierungsmutter aufgeschraubt wird, die einmal den Stift 11 in der Branche 39 sichert und zum anderen verhindert, dass die Branche 39 über ihre Länge hinaus verschwenkt wird. Am oberen Ende kann der Stift 11 gemäß Figur 1 zusätzlich mit einem Sechskant zur Aufnahme eines Stellarms 25 oder einer Ratsche versehen sein. Mittels der Ratsche 25 lässt sich der Stift 11 in den Zahn 5 einschrauben.

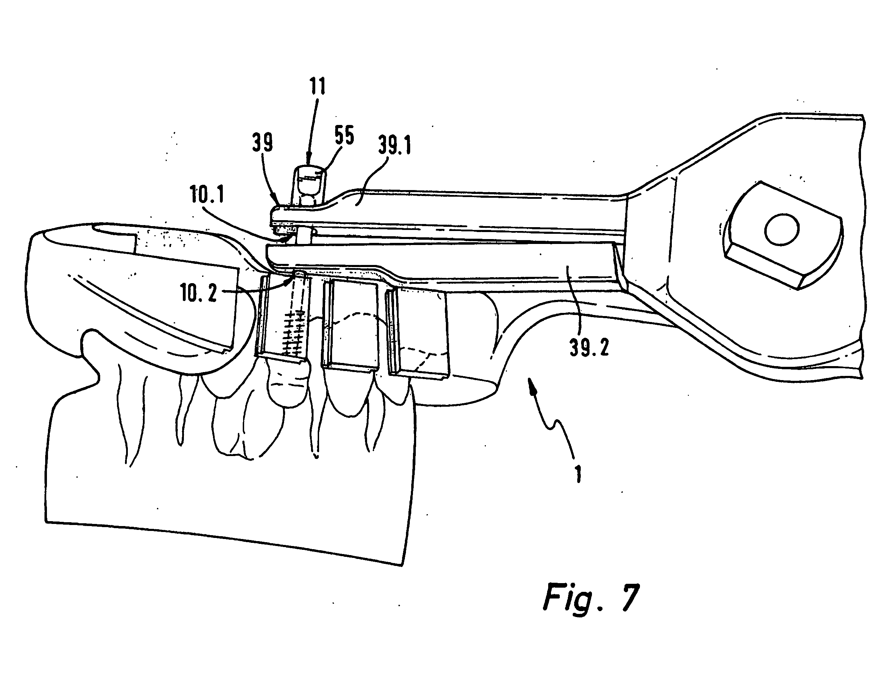

Wie aus Figur 7 hervorgeht, ist das vordere Ende des oberen Hebels bzw. der Branche 39.1 mit einer Langlochöffnung 10.1 versehen. Auch die untere Branche 39.2 kann im vorderen Bereich ebenfalls mit einer Langlochöffnung 10.2 versehen sein, so dass die beiden Branchen 39.1 und 39.2 quer zur Längsmittelachse der Wurzelschraube 11 auf das zylindrische Schaftteil 58 aufgeschoben werden können (Figur 6 und 7).

Nach einer anderen Ausführungsvariante, die in der Zeichnung jedoch nicht dargestellt ist, kann das obere Ende der Wurzelschraube 11 mit einer Bohrung versehen sein, so dass das vordere Ende der Branche 39.1 mit einem dornartigen Verbindungsteil in die entsprechende Bohrung der Wurzelschraube 11 eingeführt werden kann. Hierzu ist es jedoch unbedingt erforderlich, dass die Bohrung in der Wurzelschraube 11 genau zu dem dornartigen Verbindungselement 39 ausgerichtet ist.

Die Handhabung der Vorrichtung 1 zum Entfernen der Zähne wird jedoch wesentlich dadurch verbessert, dass beide vorderen Enden der Branchen 39.1 und 39.2 schlitzförmig ausgebildet sind.

Gemäß den Ausführungsbeispielen der Figuren 6 und 7 ist am oberen Ende des Ziehteils bzw. der Wurzelschraube 11 eine Flügelmutter 60 aufgeschraubt, die mit ihrem unteren Ende gegen die Oberfläche des Hebels 42 der Vorrichtung 1 zur Anlage kommt und durch entsprechende Weiterverstellung den Hebel 46 in Richtung des Hebels 42 verstellt, wobei die beiden Branchen 39.1 und 39.2 gemäß Figur 7 auseinanderbewegt und der Stift 11 nach oben gezogen wird. Die obere Branche 39.1 wird so lange verstellt, bis die Markierung 57 zwischen den beiden Branchen 39.1 und 39.2 sichtbar ist. Danach weiß die Bedienungsperson, dass der Zahn 5 entsprechend weit hochgezogen und somit aus seinem Zahnbett herausgenommen werden kann.

Zusammenfassend wird nochmals der Arbeitsverlauf des Einsatzes der Vorrichtung 1 nachstehend erläutert.

Für das Extraktionsverfahren des Zahns 5 wird also gemäß Figur 7 die Zange 38 in geschlossenem Zustand auf den Stift 11 aufgebracht. Die auf dem Stift 11 vorgesehene Arretierung bzw. Mutter 55 lässt eine Verstellung der oberen Branche 39 gemäß Figur 6 ohne weiteres zu. Wird also die Zange betätigt, d. h. der Griff 46 auf den Griff 42 zubewegt, so öffnen sich die beiden Branchen 39, und der Stift 11 bewegt sich in Axialrichtung entlang der Mittellinie 52, d. h. in Axialrichtung des Zahns 5. Auf diese Weise wird der Zahn ohne Verletzung des Zahnfleisches aus dem Zahnbett herausbewegt. Die exakte Bewegung der Stange 11 verläuft auf der Kreisbogenbahn, die durch den Radius R in Figur 7 angedeutet ist. Die Bewegungsrichtung ist durch den Pfeil in Figur 7 wiedergegeben. Durch die Schlitzführung in der Branche 39 kann die Stange 11 auch genau auf der Mittellinie 52 verlaufen, so dass ein seitlicher Druck auf den Zahn 5 nicht ausgeübt wird.

### Bezugszeichenliste

1 Vorrichtung zum Entfernen von Zähnen = Zange
2 Ziehgerät
3 Zahnfach, Alveole
4 Kieferknochen
5 Zahn, Zahnstumpf, Zahnwurzelrest
6 Zahnoberteil
7 Zahnkrone
8 Kieferdamm
9 erstes Widerlager, Löffel
10.1 Öffnung, Bohrung (Fig. 2) oder Schlitzöffnung (Fig. 5)
11 Ziehteil, Wurzelschraube, Stift, Extraktionsschraube, Wurzelschraube
12 Gewindeteil, rechts drehend, Widerstandselement
13 Gewindeteil, links drehend, Widerstandselement
14 Öffnung des Zahns
16 Gewinde
17 Gewinde
19 Langlochöffnung
20 Zahnlöffel
21 Wandteil
22 Seitenteil
23 Seitenteil
24 Kupplungselement
25 Stellarm, Ratsche
26 Zahnbein
27 Zahnfleisch
28 Zement
29 Wurzelkanal
30 Periodontium, Wurzelhaut
31 Kieferknochen '
32 Zahnschmelz
33 Zahnpulpa, Zahnmark
34 zweites Widerlager, Mutter, Schraubteil
35 Gewindeöffnung, Gewindebohrung
36 Bissmaterial
37 Hand
38 Hebeleinrichtung, Zange
39 Verbindungselement, Branche
39.1 obere Branche
39.2 untere Branche
40 Zange .
41 Gelenkachse, Gelenkbolzen, Gelenk
42 Hebel, Griff
43 Gewinde
44 Stange
45 Bohrung
46 zweiter Hebel, Griff
47 Federelement, Feder
48 Kupplungsteil oder Gewindeteil
49 Mutter
52 Mittellinie
55 Stellteil, Vierkantteil, Widerlager
56 Markierung
57 Markierung
58 Schaftteil
59 Halterung
60 Stellteil, Flügelmutter, Mutter, Rändelschraube

## Patentansprüche

1. Vorrichtung (1) zum Entfernen von Zähnen (5) und/oder Zahnwurzeln (5) aus dem Zahnfach (3) oder Kieferknochen (4) mit einem zangenförmig ausgebildeten, zwei Hebel (42, 46) und zwei über ein Gelenk (41) schwenkbar damit verbundene Branchen (39.1, 39.2) aufweisenden Ziehgerät und einem daran anlegbaren Widerlager (9), das mindestens eine Öffnung (10) zur Aufnahme eines Ziehteils oder Schraubteils (11) aufweist, wobei das Ziehteil (11) mit einem oder mehreren Widerstandselementen (12, 13) zur Verankerung in einem Zahn (5) oder Zahnstumpf ausgestattet ist und mindestens ein weiteres zur Kopplung mit einem Aufnahmeteil oder einer Schlitzöffnung (10.1) der Branche (39.1) dienendes Widerlager oder Stellteil (55) aufweist, **dadurch gekennzeichnet, dass** das Widerlager (9) als Löffel zur Aufnahme einer verformbaren Masse oder eines Abdruckmaterials (9.1) ausgebildet ist und der Löffel oder das Abdruckmaterial (9.1) direkt an der Mundhöhle, dem Kieferdamm (8), dem Zahnoberteil und/oder der Zahnkrone (7) anlegbar ist, die beiden Hebelarme (42, 46) manuell und mittels einer einseitig an einem Hebel (42) fixierten und in einer Öffnung oder Bohrung (45) des zweiten Hebels (46) bewegbaren Stange (44) mechanisch gegen die Wirkung eines zwischen den beiden Hebelarmen (42, 46) angeordneten Federelements (47) und zum Einleiten der zum Ziehen des Zahns (5) notwendigen Kraft verstellbar sind, wobei die Stange (44) ein Gewinde (43) aufweist und auf das Gewinde (43) der Stange (44) eine Flügelmutter (60) aufgedreht ist, die an den Hebel (46) anlegbar ist.

2. Vorrichtung nach Anspruch 1, **dadurch gekennzeichnet, dass** das Ziehteil (11) ein erstes in eine öffnung (14) des Zahns (5) einführbares Widerstandselement oder Gewindeteil (12) und ein Stellteil (55) und/oder zweites Gewindeteil (13) aufweist.

3. Vorrichtung nach Anspruch 1 oder 2, **dadurch gekennzeichnet, dass** die Gewinde (16, 17) des ersten und zweiten Gewindeteils (12, 13) gegenläufig zueinander ausgebildet sind.

4. Vorrichtung nach einem der vorhergehenden Ansprüche, **dadurch gekennzeichnet, dass** das Widerlager (9) derart ausgebildet ist, dass es auf mindestens zwei oder mehreren neben dem zu extrahierenden Zahn (14) vorhandenen Zähnen (5) abstützbar ist.

5. Vorrichtung nach einem der vorhergehenden Ansprüche, **dadurch gekennzeichnet, dass** das Widerlager (9) als Zahnlöffel (20) ausgebildet ist und eine oder mehrere Öffnungen (10) oder eine Langlochöffnung (19) aufweist.

6. Vorrichtung nach einem der vorhergehenden Ansprüche, **dadurch gekennzeichnet, dass** der Zahnlöffel (20) aus einem als Widerlager ausgebildeten Wandteil (21) und mindestens zwei das Wandteil (21) begrenzenden Seitenteilen (22, 23) gebildet ist, die dem kurvenförmigen Verlauf des Kiefers angepasst sind.

7. Vorrichtung nach einem der vorhergehenden Ansprüche, **dadurch gekennzeichnet, dass** das Ziehteil (11) an seinem oberen Ende ein Kupplungsteil (55) zum Anschluss eines Stellarms (25) aufweist.

8. Vorrichtung nach einem der vorhergehenden Ansprüche, **dadurch gekennzeichnet, dass** die Stange (44) an ihrem oberen Ende ein Kupplungsteil oder Gewindeteil (48) zum Anschluss eines Stellteils und/oder einer Mutter (51) aufweist.

9. Vorrichtung nach einem der vorhergehenden Ansprüche, **dadurch gekennzeichnet, dass** die Stange (44) zumindest ein Federelement (47) aufnimmt.

10. Vorrichtung nach einem der vorhergehenden Ansprüche, **dadurch gekennzeichnet, dass** das erste Widerlager oder der Löffel (9) an dem einen Hebel oder einer Branche (39) fest oder lösbar angeordnet ist.

11. Vorrichtung nach einem der vorhergeheliden Ansprüche, **dadurch gekennzeichnet, dass** das Ziehteil oder die Stange (44) ein Stellteil und/oder Arretierungsteil (51) aufweist, mittels dessen die Stange (44) betätigbar ist.

12. Vorrichtung nach einem der vorhergehenden Ansprüche, **dadurch gekennzeichnet, dass** das Stellteil als Schrittmotor ausgebildet ist, der mit der Stange (44) oder dem Ziehteil (11) in Wirkverbindung bzw. in Antriebsverbindung bringbar ist, mittels dessen der Zahn aus dem Zahnfach mittel- oder unmittelbar herausziehbar ist.

13. Vorrichtung nach einem der vorhergehenden Ansprüche, **dadurch gekennzeichnet, dass** das Ziehteil (11) starr ausgebildet ist und zwischen seinem oberen und unteren Ende zumindest eine Markierung oder Einkerbung oder zwei mit Abstand zueinander angeordnete Markierungen (57) aufweist, die derart angeordnet ist, dass sie als Maß für den Stellweg des Zahns aus seinem Zahnfach dient.

14. Vorrichtung (1) nach Anspruch 1 oder 13, **dadurch gekennzeichnet, dass** die Markierung auf einem gewindelosen Schaftteil (58) des Ziehteiles (11) angeordnet ist.

## Claims

1. A device (1) for removing teeth (5) and/or the roots of teeth (5) from a tooth socket (3) or jaw bone (4) with one pincer-shaped drawing device comprising two levers (42, 46) and two branches (39.1, 39.2) which are connected to it via a join (41) in such a way that they can be rotated, and one counter flange (9) which can be positioned on it, which comprises at least one opening (10) for retaining a drawing piece or screwing piece (11), the drawing piece (11) being fitted with one or more resistance elements (12, 13) for anchoring within a tooth (5) or tooth stump, and which comprises at least one further counter flange or positioning piece (55) which is used for coupling with a retaining piece or a slit opening (10.1) on the branch (39.1), **characterised in that** the counter flange (9) is formed as a spoon for retaining a ductile mass or an impression material (9.1), and that the spoon or the impression material (9.1) can be placed directly onto the mouth cavity, the alveolar ridge (8), the upper part of the tooth and/or the tooth crown (7), that the two lever arms (42, 46) can mechanically be adjusted manually and using a rod (44) which is affixed on one side of a lever (42) and which can be moved in an opening or bore hole (45) of the second lever (46), against the influence of a second spring element (47) which is arranged between the two lever arms (42, 46), and to initiate the force required to pull the tooth (5), the rod (44) comprising a thread (43) and a butterfly nut (60) being screwed onto the thread (43) of the rod (44), which can be placed onto the lever (46).

2. A device according to claim 1, **characterised in that** the drawing piece (11) comprises a first resistance element or threaded piece (12) which can be inserted into an opening (14) of the tooth (5), and a positioning piece (55) and/or a second threaded piece (13).

3. A device according to claims 1 or 2, **characterised in that** the thread (16, 17) of the first and second threaded piece (12, 13) are designed in such a way that they run counter to each other.

4. A device according to one of the above claims, **characterised in that** the counter flange (9) is designed in such a way that it can be supported by at least two or more teeth (5) located next to the tooth to be extracted (14).

5. A device according to one of the above claims **characterised in that** the counter flange (9) is designed as a dental spoon (20), and that it comprises one or more openings (10) or one elongated hole opening (19).

6. A device according to one of the above claims, **characterised in that** the dental spoon (20) is formed from a wall section (21) which is designed as a counter flange and at least two side sections (22, 23) which border the wall section (21), which are adjusted to fit the curved lines of the jaw.

7. A device according to one of the above claims, **characterised in that** the drawing piece (11) comprises on its upper end a coupling piece (55) for connecting a positioning arm (25).

8. A device according to one of the above claims, **characterised in that** the rod (44) comprises on its upper end a coupling piece or threaded piece (48) for connecting a positioning piece and/or a nut (51).

9. A device according to one of the above claims, **characterised in that** the rod (44) contains at least one spring element (47).

10. A device according to one of the above claims, **characterised in that** the first counter flange or spoon (9) is arranged on one of the levers or a branch (39) either firmly or in a detachable manner.

11. A device according to one of the above claims **characterised in that** the drawing piece or the rod (44) comprises a positioning piece and/or a clamping piece (51) with which the rod (44) can be moved.

12. A device according to one of the above claims, **characterised in that** the positioning piece is designed as a stepper motor, which can be made to interact or form a drive connection with the rod (44) or the drawing piece (11) with which the tooth can be directly or indirectly drawn out of the tooth socket.

13. A device according to one of the above claims, **characterised in that** the drawing piece (11) is of a rigid design, and comprises between its upper and lower end at least one marking or notch, or two markings (57) which are arranged at a distance from each other, which is arranged in such a way that it can be used as a gauge for the adjustment distance between the tooth and its tooth socket.

14. A device according to claim 1 or 3, **characterised in that** the marking is arranged on an unthreaded shaft piece (58) on the drawing piece (11).

## Revendications

1. Dispositif (1) pour le retrait de dents (5) et/ou de racines de dents de l'alvéole dentale (3) ou de l'os maxillaire (4) avec un appareil de traction en forme de pince, comportant deux leviers (42, 46) et deux branches (39.1, 39.2) raccordées à ceux-ci par une articulation (41) permettant leur pivotement, et une butée (9) applicable contre celui-ci présentant au moins une ouverture (10) pour le logement d'une pièce de traction ou d'une pièce à visser (11), la pièce de traction (11) étant pourvue d'un ou de plusieurs éléments de résistance (12, 13) pour l'ancrage dans une dent (5) ou un chicot et présentant au moins une autre butée ou pièce de réglage (55) pour accouplement avec une pièce de réception ou une ouverture en fente (10.1) de la branche (39 .1), **caractérisé en ce que** la butée (9) est formée comme porte-empreinte pour la réception d'une masse déformable ou d'un matériau d'empreinte (9.1) et **en ce que** le porte-empreinte ou le matériau d'empreinte (9.1) est directement applicable contre la cavité buccale, la mandibule, la partie supérieure de la dent et/ou la couronne dentaire (7), **en ce que** les deux bras de levier (42, 46) sont réglables manuellement, et mécaniquement au moyen d'une tige (44) mobile fixée sur un côté de levier (42) et dans un orifice ou alésage (45) du deuxième levier (46), contre l'action d'un élément à ressort (47) disposé entre les deux bras de levier (42, 46) pour appliquer la force nécessaire à l'extraction de la dent (5), la tige (44) présentant un filet (43) et un écrou à oreilles (60) applicable contre le levier (46) étant tourné sur le filet (43) de la tige (44).

2. Dispositif selon la revendication 1, **caractérisé en ce que** la pièce de traction (11) comporte un premier élément de résistance ou pièce filetée (12) insérable dans une ouverture (14) de la dent (5) et une pièce de réglage (55) et/ou une deuxième pièce filetée (13).

3. Dispositif selon la revendication 1 ou 2, **caractérisé en ce que** les filets (16, 17) de la première et de la deuxième pièce filetée (12, 13) sont configurées avec une rotation contraire l'une à l'autre.

4. Dispositif selon l'une des revendications précédentes, **caractérisé en ce que** la butée (9) est formée de manière à pouvoir s'appuyer sur au moins deux ou plusieurs dents (5) présentes à côté de la dent à extraire (14).

5. Dispositif selon l'une des revendications précédentes, **caractérisé en ce que** la butée (9) est formée comme porte-empreinte (20) et présente une ou plusieurs ouvertures (10) ou une ouverture oblongue (19).

6. Dispositif selon l'une des revendications précédentes, **caractérisé en ce que** le porte-empreinte (20) est formé d'une pièce de paroi (21) configurée comme butée et d'au moins deux pièces latérales (22, 23) délimitant la pièce de paroi (21), adaptées au tracé courbe de la mâchoire.

7. Dispositif selon l'une des revendications précédentes, **caractérisé en ce que** la pièce de traction (11) présente à son extrémité supérieure une pièce d'accouplement (55) pour le raccord d'un bras de réglage (25).

8. Dispositif selon l'une des revendications précédentes, **caractérisé en ce que** la tige (44) présente à son extrémité supérieure une pièce d'accouplement ou pièce filetée (48) pour le raccord d'une pièce de réglage et/ou d'un écrou (51).

9. Dispositif selon l'une des revendications précédentes, **caractérisé en ce que** la tige (44) reçoit au moins un élément à ressort (47).

10. Dispositif selon l'une des revendications précédentes, **caractérisé en ce que** la première butée ou le porte-empreinte (20) sont fixement ou amoviblement disposés sur le premier levier ou sur une branche (39).

11. Dispositif selon l'une des revendications précédentes, **caractérisé en ce que** la pièce de traction ou la tige (44) présentent une pièce de réglage et/ou une pièce d'arrêt (51) au moyen de laquelle la tige (44) est manoeuvrable.

12. Dispositif selon l'une des revendications précédentes, **caractérisé en ce que** la pièce de réglage est formée comme moteur pas à pas pouvant être mis en relation active ou en relation d'entraînement avec la tige (44) ou la pièce de traction (11), au moyen de laquelle la dent peut être directement ou indirectement extraite de l'alvéole dentale.

13. Dispositif selon l'une des revendications précédentes, **caractérisé en ce que** la pièce de traction (11) est rigide et présente entre son extrémité supérieure et son extrémité inférieure au moins une marque ou une encoche, ou deux marques (57) disposées à intervalle l'une de l'autre de manière à servir de cote pour la course de la dent en dehors de son alvéole.

14. Dispositif (1) selon la revendication 1 ou 3, **caractérisé en ce que** la marque est disposée sur une partie en tige non filetée (58) de la pièce de traction (11).
